# EUROPEAN PATENT APPLICATION

(11) **EP 4 711 257 A1**
(43) Date of publication of application: **18.03.2026**
(21) Application number: 24307010.9
(22) Date of filing: 02.12.2024
(51) Int. Cl.: B63B 21/50, F03D 13/25, B63B 35/44

(54) **FLOATING PLATFORM MOORING SYSTEM AND METHOD OF INSTALLATION**

(30) Priority: 13.09.2024 EP 24306519
(60) Divisional application: 25201563.1
(71) Applicant: Technip Energies France, 92741 Nanterre Cedex (FR)
(72) Inventor: Durix, Mathieu, 92741 Nanterre Cedex (FR); Bastet, Patrice, 92741 Nanterre Cedex (FR); Di-Maggio, Giuseppe, 92741 Nanterre Cedex (FR)
(74) Representative: Edson, Russell Gregory

(57) **Abstract**

A tensioned leg floating platform mooring system and related methods may be used to secure the position of a floating platform. For example, the floating platform mooring system may include at least three fixed-length mooring lines coupled at different locations between a floating platform and one of one or more mooring piles. Additionally, the tensioned leg floating platform mooring system can include an adjustable-length mooring line coupled between the floating platform and one of the one or more mooring piles. The floating platform mooring system may further include a mooring line tension device coupled to the adjustable-length mooring line. The mooring line tension device may adjust a tension of the adjustable-length mooring line by adjusting a length of the adjustable-length mooring line in situ.

## Description

### Technical Field

The present disclosure relates generally to floating platform securement, and more particularly although not necessarily exclusively, to a floating platform mooring system that may be used to secure a position of a floating platform.

### Background

Floating platforms can be used to support various structures or equipment upon a water surface. For example, a wind turbine can be mounted to a floating wind turbine platform that is deployed offshore. Then, wind-caused rotation of a rotor blade of the wind turbine can be used to drive a generator to produce electrical energy. However, wind, wave, or other suitable environmental conditions may cause undesirable movements or changes in location or orientation of floating platforms. A mooring system can be employed to secure the location and orientation of a floating platform, and to prevent or minimize other movements such as tilting or bobbing. Achieving desired tension in mooring lines has traditionally been difficult due to component tolerance stack up, greater than anticipated anchor settlement, etc.

### Summary

As used below, any reference to a series of examples is to be understood as a reference to each of those examples disjunctively (e.g., "Examples 1-4" is to be understood as "Examples 1, 2, 3, or 4").

Example 1 is a floating platform mooring system comprising at least three fixed-length mooring lines coupled at different locations between a floating platform and one of a plurality of mooring piles, an adjustable-length mooring line coupled between the floating platform and one of the mooring piles, and a mooring line tension device coupled to the adjustable-length mooring line to adjust a tension of the adjustable-length mooring line by adjusting a length of the adjustable-length mooring line in situ.

Example 2 is the floating platform mooring system of example(s) 1, wherein the mooring line tension device comprises a linearly displaceable element that adjusts the length of the adjustable-length mooring line by displacing an end of the adjustable-length mooring line.

Example 3 is the floating platform mooring system of example(s) 2, wherein the mooring line tension device further comprises a jackscrew assembly, and wherein the linearly displaceable element comprises a linearly displaceable lifting screw of the jackscrew assembly.

Example 4 is the floating platform mooring system of example(s) 1-3, wherein the mooring line tension device is coupled between the floating platform and a platform end of the adjustable-length mooring line.

Example 5 is the floating platform mooring system of example(s) 1-3, wherein the mooring line tension device is coupled between one of the mooring piles and a pile end of the adjustable-length mooring line.

Example 6 is the floating platform mooring system of example(s) 1-5, further comprising one or more adjustment links, wherein each of the one or more adjustment links is removably couplable to a fixed-length mooring line of the three fixed-length mooring lines to change an effective length of an assembly comprising the adjustment link and the fixed-length mooring line.

Example 7 is the floating platform mooring system of example(s) 6, wherein each of the one or more adjustment links are removably couplable between one of the one or more mooring piles and a pile end of a fixed-length mooring line of the at least three fixed-length mooring lines.

Example 8 is the floating platform mooring system of example(s) 1-7, wherein the floating platform comprises a floating wind turbine platform and a tension leg platform buoy, and wherein the at least three fixed-length mooring lines and the adjustable-length mooring line extend between the tension leg platform buoy and the one or more mooring piles.

Example 9 is a method of mooring a floating platform. The method comprises coupling at least three fixed-length mooring lines at different locations between the floating platform and one or more mooring piles, coupling an adjustable-length mooring line between the floating platform and the one or more mooring piles, and adjusting a tension of the adjustable-length mooring line by adjusting a length of the adjustable-length mooring line in situ using a mooring line tension device coupled to the adjustable-length mooring line.

Example 10 is the method of example(s) 9, further comprising, prior to coupling the at least three fixed-length mooring lines and the adjustable-length mooring line between the floating platform and the one or more mooring piles, ballasting the floating platform to position the floating platform at an installation depth in a body of water, wherein the installation depth is closer to a floor of the body of water than an operating depth of the floating platform.

Example 11 is the method of example(s) 10, wherein the step of coupling the at least three fixed-length mooring lines at different locations between the floating platform and one or more mooring piles is performed while the floating platform is at the installation depth.

Example 12 is the method of example(s) 10, wherein the step of coupling the adjustable-length mooring line between the floating platform and the one or more mooring piles is performed while the floating platform is at the installation depth.

Example 13 is the method of example(s) 10, further comprising, subsequent to coupling the at least three fixed-length mooring lines and the adjustable-length mooring line between the floating platform and the one or more mooring piles, unballasting the floating platform to position the floating platform at the operating depth.

Example 14 is the method of example(s) 13, further comprising, prior to unballasting the floating platform: partially unballasting the floating platform to position the floating platform at a testing depth, wherein the testing depth is between installation depth and the operating depth; determining an angle of a horizontal axis of the floating platform with respect to a reference horizontal plane while the floating platform is at the testing depth; and determining that the angle is within a degree tolerance.

Example 15 is the method of example(s) 13, further comprising, prior to unballasting the floating platform: partially unballasting the floating platform to position the floating platform at a testing depth, wherein the testing depth is between installation depth and the operating depth; determining an angle of a horizontal axis of the floating platform with respect to a reference horizontal plane while the floating platform is at the testing depth; and determining that the angle is outside of a degree tolerance.

Example 16 is the method of example(s) 15, further comprising, in response to determining that the angle is outside of the degree tolerance, adjusting a leveling of the floating platform by: re-ballasting the floating platform to reposition the floating platform at the installation depth; disconnecting a fixed-length mooring line of the at least three fixed-length mooring lines from the one or more mooring piles; coupling an adjustment link with the fixed-length mooring line; and reconnecting the fixed-length mooring line with the one or more mooring piles.

Example 17 is the method of example(s) 16, wherein the step of coupling the adjustment link with the fixed-length mooring line comprises replacing a first adjustment link of a first length with a second adjustment link of a second, different length.

Example 18 is the method of example(s) 14, further comprising, in response to determining that determining that the angle is within the degree tolerance: measuring, while the floating platform is at the testing depth, tension on the adjustable-length mooring line and on the at least three fixed-length mooring lines; and comparing the tension on the adjustable-length mooring line to the tension on each of the at least three fixed-length mooring lines.

Example 19 is the method of example(s) 18, wherein the step of adjusting the tension of the adjustable-length mooring line is performed in response to determining that at least one difference between the tension on adjustable-length mooring line and the tension on each of the at least three fixed-length mooring lines exceeds a threshold difference.

Example 20 is the method of example(s) 18, wherein the step of unballasting the floating platform to position the floating platform at the operating depth is performed in response to determining that differences between the tension on the adjustable-length mooring line and the tension on each of the at least three fixed-length mooring lines are less than a threshold difference.

### Brief Description of the Drawings

FIG. 1A shows an example of a floating platform mooring system according to some embodiments of the present disclosure.
FIG. 1 B is a schematic, side view of the floating platform mooring system according to some embodiments of the present disclosure.
FIG. 2 shows an example of an adjustable-length mooring line of the floating platform mooring system according to some embodiments of the present disclosure.
FIG. 3 shows an example of a fixed-length mooring line of the floating platform mooring system according to some embodiments of the present disclosure.
FIG. 4 shows an example of a mooring line tension device for use with the floating platform mooring system according to some embodiments of the present disclosure.
FIG. 5 shows an example of a fixed connector for use with the floating platform mooring system according to some embodiments of the present disclosure.
FIG. 6 shows another example of a fixed connector for use with the floating platform mooring system according to some embodiments of the present disclosure.
FIG. 7 shows another example of a fixed connector for use with the floating platform mooring system according to some embodiments of the present disclosure.
FIG. 8 shows an example of a set of adjustment links for the floating platform mooring system according to some embodiments of the present disclosure.
FIG. 9 is a flow chart of an example of a process for mooring a floating platform using the floating platform mooring system according to some embodiments of the present disclosure.

### Detailed Description

A mooring system and method are disclosed for mooring a floating platform in a body of water, such as an ocean, sea, lake, or other body of water, whether natural or manmade, sufficient to support a floating platform. Certain aspects and examples of the mooring system relate to a floating platform mooring system that can include a plurality (typically three) fixed-length mooring lines in combination with at least one adjustable-length mooring line. A length of each fixed-length mooring line is not readily adjustable in situ, i.e., while connected between two coupling points, such as at one end (i.e., a pile end) to a mooring pile on a floor of a body of water and at another end (i.e., a platform end) to a floating platform deployed in the body of water. In contrast, a length of each adjustable-length mooring line as taught herein can be changed in-situ. That is, while the lengths and corresponding tension of the fixed-length mooring lines are not readily adjustable in situ, the length of the adjustable-length mooring line can be adjusted without having to remove any of the mooring lines to change tension.

Due to the combined use of fixed and adjustable-length mooring lines, load sharing can be fine-tuned and optimized among the fixed and adjustable-length mooring lines while the adjustable and fixed-length mooring lines are in-situ. For example, due to the fixed and similar lengths of the fixed-length mooring lines, the fixed-length lines can each support a similar amount of a load associated with the floating platform and therefore there can be similar tension on the fixed-length mooring lines. The fixed-length mooring lines can further facilitate a suitable positioning of the floating platform in terms of horizontality and depth. The suitable positioning in terms of horizontality and depth can include the floating platform being positioned at or near a preferred depth within the body of water and with a surface of the floating platform substantially parallel to a surface and/or floor of the body of water. Then, the adjustability of the adjustable-length mooring lines can be used to decrease any discrepancies in the similar tensions on each of the fixed-length mooring lines while the fixed and adjustable-length mooring lines are in-situ. The combination of fixed and adjustable-length mooring lines can ensure stability and safety in the event of a failure of one of the mooring lines. For example, if a fixed-length mooring line were to fail (e.g., break), the load sharing can be maintained via the use of the adjustable-length mooring line.

The floating platform may be positioned at an offshore site in the body of water. Examples of the floating platform can include a tension leg platform, a semi-submersible platform, a SPAR platform, a barge platform, or any other floating platform that can be stabilized using tensioned mooring lines. In one particular example, the floating platform can be floating wind turbine platform. The floating wind turbine platform can be a particular type of tension leg platform for supporting a wind turbine. In the particular example, the floating wind turbine platform can include spaced apart semisubmersible columns that are arranged in a pattern. For example, the columns of the floating wind turbine platform may be arranged in a polygonal pattern, with one column of the plurality of columns located at each vertex of the polygon. In another example, the floating wind turbine platform may have a triangular shape, with one column of three total columns located at each vertex of the triangle. Additionally, a wind turbine tower or other support may be attached to and extend upward from a top of one or more of the columns or may otherwise be located within and extend upward from an area bounded by the columns.

In some examples, the columns can each have a hollow internal volume and can provide buoyancy to the floating platform. To provide buoyancy and/or impart floating stability to the floating platform each of the columns may contain a ballast distributable among the columns. The columns may further be rigidly interconnected by a plurality of braces arranged in any of various configurations. The braces may also be hollow. In some examples, at least some of the braces may act as pontoons that can provide additional buoyancy to the floating platform. In some examples, at least some of the pontoons may also contain ballast. In some examples, the floating wind platform may also include a float (e.g., a tension leg platform buoy). The float may be secured to a bottom of at least one of the columns to help keep the floating wind turbine platform afloat.

The floating platform mooring system can be employed to secure the location of a floating platform, such as a floating wind turbine platform. In some examples, the floating platform mooring system may include one or more mooring piles that are located on the floor of the body of water. Mooring lines of the floating platform mooring system may be used to couple a floating platform to the mooring piles in a tensioned leg arrangement. The mooring lines may be coupled directly to the floating platform (or a component associated with the floating platform) or a float (e.g. a tension leg platform buoy) secured to the floating platform (or a component of the float). Once coupled to the mooring piles by the mooring lines, movements of the floating platform such as tilting, bobbing, or drifting can be prevented or minimized.

The mooring lines of the floating platform mooring system in at least some implementations can require a degree of tension and balance to properly secure the position and control movement of the floating platform to which the mooring lines are connected. Mooring line tension may depend, among other things, on mooring line length. In at least some instances it may be difficult to estimate what proper mooring line lengths should be prior to installation due to component tolerances or for other reasons, or if the mooring pile(s) depth or other aspects deviate from an expected depth due to settling or otherwise deviates from desired parameters. Improper mooring line length can result in undesirable floating platform installation parameters such as improper depth, improper tilting, improper mooring line tensions, and/or mooring line tension imbalance between multiple mooring lines. For example, due to settling of one or more mooring piles in a floor of the body of water, mooring line tension may be significantly greater in a first subset of the mooring lines than in a second subset of the mooring lines, which could potentially result in the floating platform tipping or otherwise being unbalanced, or over tensioning one subset of mooring lines and under tensioning another set of mooring lines.

Examples of the floating platform mooring systems and methods described herein may provide a reliable and efficient way of mooring a floating platform. In one example, a floating platform mooring system includes three fixed-length mooring lines and a adjustable-length mooring line (or more than one adjustable-length mooring line), and a mooring line tension device coupled to the adjustable-length mooring line (or several mooring line tension devices with each coupled to one of the adjustable-length mooring lines). The fixed-length mooring lines may be coupled at different locations between a floating platform and one of several mooring piles. The adjustable-length mooring line(s) may be coupled between the floating platform and one of the mooring piles, with the tension device(s) coupled to the adjustable-length mooring line(s) to adjust a tension of the adjustable-length mooring line(s) by adjusting a length of the adjustable-length mooring line in situ.

In one example installation method, while the floating platform is at an installation depth, the adjustable-length mooring lines and the fixed-length mooring lines may be coupled at different locations (e.g., alternating locations) between the platform and the mooring piles. In some implementations, after coupling, the adjustable-length mooring line(s) may have an initial length that is greater than (e.g., around 30 centimeters greater than) a length of the fixed-length mooring lines. Next, the floating platform may be partially unballasted to a testing depth, which can be between the installation depth and an operating depth. By way of example, the installation depth can be a depth at which there is minimal tension in the adjustable-length and fixed-length mooring lines; the testing depth can be a depth at which there is moderate tension in at least the fixed-length mooring lines; and the operating depth can be a depth at which the tension in the mooring lines is further increased to a tension at which the adjustable-length and fixed-length mooring lines are supporting the floating platform. As noted earlier, the adjustable-length mooring line(s) can have an initial length that is greater than (e.g., around 30 centimeters greater than) a length of the fixed-length mooring lines to allow the adjustable-length mooring lines to initially be under less tension than the fixed-length mooring lines, such as when the floating platform is unballasted to the testing depth. The adjustable-length mooring line(s) having a greater initial length than the fixed-length mooring lines can enable tension on the fixed-length lines to be initially balanced and/or can enable the floating body installation parameters to be initially adjusted (e.g. to ensure the floating body is floating in a level or substantially level condition) prior to reenforcing the fixed-length lines with the adjustable-length lines.

While the floating platform is positioned at the testing depth, the floating platform and mooring system installation parameters (e.g., horizontality, depth, tension, etc.) can be checked. As described above, the pre-calculated mooring line length and/or tension of each of the fixed-length mooring lines might differ from an expected value due to component tolerances or for other reasons. Due to the pre-calculated mooring line length and/or tension differing from the expected value, the floating platform may not be properly positioned at the testing depth. For example, the floating platform may not be sufficiently horizontal (e.g., may not be substantially parallel to a reference horizontal plane) and/or may be positioned above or below the testing depth. In such cases, the fixed-length mooring lines cannot be easily adjusted in situ as they are under tension and connected to the mooring piles and the floating platform. Rather, making a change to the fixed-length mooring line to impart a desired change in positioning of the floating platform generally requires de-coupling the fixed-length mooring line from of the coupling points (e.g., from a mooring pile). In a simple example the fixed-length mooring line may be disconnected and swapped out for another mooring line having a different length to impart the proper positioning. But, swapping out a mooring line may be impractical. Alternatively, changing an effective length (i.e., the total line length along the mooring line between the two coupling points or the total length along an assembly that includes the mooring line and an adjustment link between the two coupling points) of a fixed-length mooring line can instead be performed by changing an assembly that includes the fixed-length mooring line and an adjustment link, by, for example adding, removing, or switching out the adjustment link. The adjustment link may be coupled between the pile end of fixed-length mooring line and a mooring pile, for example. This changes the effective length of the fixed-length mooring line and adjustment link assembly, which in this case, is between the respective coupling points defined by the floating platform and the mooring pile.

Because the fixed-length mooring lines are not adjustable in-situ, adjustment of one or more of the fixed-length mooring lines may require in at least some implementations ballasting the floating platform back to the installation depth. Then, at least one of the fixed-length mooring lines can be disconnected from the corresponding mooring pile and retrieved at the floating platform. At the floating platform, an adjustment link can be added to, removed from, or switched out at the fixed-length mooring line to change the effective length of the assembly with the adjustment link and fixed-length mooring line. For instance, an adjustment link of a first length can be replaced with an adjustment link of a second, different length, to change the overall length of the assembly of the fixed-length mooring line and adjustment link. As a result, once the fixed-length mooring line is reconnected with the mooring pile (e.g., via the adjustment link with the second, different length), the difference in length imparted on the assembly by adding the adjustment link with the second, different length can alter the positioning (e.g., the depth and/or horizontality) of the floating platform.

In some implementations, the adjustment links may be used with the fixed-length mooring lines to achieve a gross level of tension balance of the floating platform mooring system, or at least of the fixed-length mooring lines. For example, by positioning the floating platform sufficiently horizontal with respect to the reference horizontal plane, the gross level of tension balance can be achieved.

In some implementations, mooring line tension devices associated with the adjustable-length mooring lines may be used to achieve a fine level of adjustment of the tension balance of the floating platform mooring system. For example, in the testing position, tension on the adjustable-length mooring line can be measured and compared to tension on each of the fixed-length mooring lines. If there is a significant difference (e.g., a difference that exceeds a threshold difference) between the tension on the adjustable-length mooring line and the tension on any of the fixed-length mooring lines, adjustments can be made to an effective length (i.e., the total line length along the adjustable-length mooring line between the two coupling points or a total length of an assembly that includes the adjustable-length mooring line and a mooring line tension device between the two coupling points) of the adjustable-length mooring line using a mooring line tension device. The length of the adjustable-length mooring line can be adjusted until a load associated with the floating platform is shared substantially equally among the adjustable-length mooring line and the fixed-length mooring lines (i.e., until tension differences between the adjustable length mooring line and each of the fixed-length mooring lines are equal to or less than the threshold difference).

In one example of adjusting the effective length of the adjustable-length mooring line using the mooring line tension device, the mooring line tension device may be coupled to an end of the adjustable-length mooring line, with actuation of the mooring line tension device acting to effectively lengthen or shorten (depending on the direction of actuation) the assembly with the adjustable-length mooring line and the mooring line tension device. In some implementations the mooring line tension device can include a linearly displaceable element of a linear actuator positioned within and coupled with a housing. Operation of the linear actuator may result in linear displacement of the linearly displaceable element relative to the housing. In some examples, the linearly displaceable element may be a linearly displaceable lifting screw (e.g., a threaded lifting screw) of a jackscrew assembly that is coupled to a base portion of the housing. The jackscrew assembly may include a worm drive of which the lifting screw can be a part. Rotation of a worm gear of the worm drive can produce a linear displacement of the lifting screw relative to the housing. The worm drive may include an input shaft or a similar element that may be engaged by a submersible tool, such as a submersible torque tool operated by a remotely operated vehicle (ROV). This allows the mooring line tension device to be operated while in an installed and submerged or semi-submerged position.

Therefore, the mooring line tension device can be used to adjust the amount of tension on the adjustable-length mooring line in situ by displacing an end of the adjustable-length mooring coupled with the mooring line tension device (i.e., while the adjustable-length mooring line remains connected to the floating platform and the mooring pile). Particularly, operation of the linear actuator in one direction can cause a linear displacement of the linearly displaceable element toward a proximal end of the mooring line tensioning device housing and toward the platform, which can decrease the effective length of the adjustment-length mooring line, thereby increasing the amount of tension on the mooring line. Operation of the linear actuator in an opposite direction can cause a linear displacement of the linearly displaceable element toward a distal end of the mooring line tension device housing and away from the platform, which increase the effective length of the adjustable-length mooring line, thereby reducing the amount of tension on the mooring line. In either case, in at least some implementations, the mooring line tension adjustment can occur without the need to disconnect and retrieve the adjustable-length mooring line.

Once the tension, as measured using, for example, load sensors, is sufficiently similar at each of the fixed-length and adjustable-length mooring lines, the floating platform can be fully unballasted to its operating depth. Therefore, using the floating platform mooring system and corresponding method of installation, tension deviations can be minimized during an installation process of the mooring lines. This can minimize a risk of failure of the mooring lines at the operating depth, which, in turn, can prevent undesirable movements or damage to the floating platform.

Illustrative examples follow and are given to introduce the reader to the general subject matter discussed herein rather than to limit the scope of the disclosed concepts. The following sections describe various additional features and examples with reference to the drawings in which like numerals indicate like elements, and directional descriptions are used to describe the illustrative aspects, but, like the illustrative aspects, should not be used to limit the present disclosure.

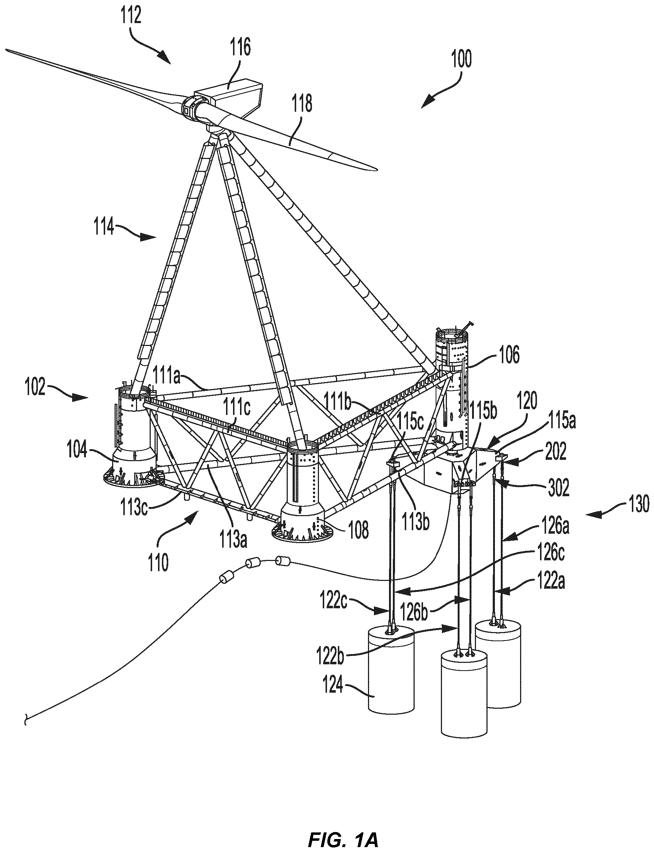

FIG. 1A shows an example of a floating platform mooring system 100 according to some embodiments of the present disclosure. In the particular example shown in FIG. 1A, the floating platform mooring system 100 can be used to moor a floating platform 101. The floating platform 101 can include a floating wind turbine platform 102. In this example, the floating wind turbine platform 102 can include columns 104, 106, 108 which can be spaced apart and respectively arranged at three points of a triangle. The columns 104, 106, 108 can impart a degree of buoyancy to the floating wind turbine platform 102. In other examples, a different number of columns and other arrangements of the columns are possible in other examples.

In this example, the floating platform 101 also includes a tension leg platform buoy 120 at a bottom end of column 106. The tension leg platform buoy 120 can be a smaller floating platform that can be rotatably coupled with the column 106 of the floating wind turbine platform 102. Due to the rotatable coupling of the floating wind turbine platform 102 and the tension leg platform buoy 120, the floating wind turbine platform 102 may turn passively with respect to the tension leg platform buoy 120 based on wind direction. The tension leg platform buoy 120 may further be the portion of the floating platform 101 that is moored to a floor of a seabed to prevent undesirable movement of the floating wind turbine platform 102 (e.g., movements other than rotation around the tension leg platform buoy 120).

Additionally, the columns 104, 106, 108 can be rigidly interconnected by a plurality of braces 110. The braces 110 may be arranged in any of various configurations. In some examples, at least some of the braces 110 may also be hollow and may act as pontoons that can provide additional buoyancy to the floating wind turbine platform 102. For example, the braces 110 can include upper connecting members 111a-c and pontoons 113a-c. In some examples, at least some of the braces 110 (e.g., pontoons 113a-c) may contain ballast, such as water ballast.

A wind turbine 112 can be affixed to the floating wind turbine platform 102. In this example, the wind turbine 112 includes an upwardly extending support structure 114 having three separate legs that are respectively affixed to the columns 104, 106, 108. In other examples, the wind turbine 112 may include a single tower that is securely affixed to the top of one of the columns 104, 106, 108. Other wind turbine locations and affixation techniques relative to the floating wind turbine platform 102 are also possible in other examples. As shown, the wind turbine 112 can also include a nacelle 116 enclosing a gearbox and a generator, and a rotor blade 118. The generator may be operated to produce electrical energy by wind-driven rotation of the rotor blade 118.

As represented in FIG. 1A, the tension leg platform buoy 120 may be a part of the floating wind turbine platform 102. In this example, the tension leg platform buoy 120 is attached to a bottom end of the column 106 of the floating wind turbine platform 102. In other examples, the tension leg platform buoy 120 may instead be attached to the bottom end of column 104 or column 108, or the tension leg platform buoy 120 may be attached to more than one of the columns 104, 106, 108. Additionally, in other examples, there may be more than one tension leg platform buoy 120. In some examples, the tension leg platform buoy 120 can be a source of buoyancy for the floating wind turbine platform 102. To that end, the tension leg platform buoy 120 may be a hollow or substantially hollow structure and may be constructed from steel or a similarly sturdy material. As with the columns 104, 106, 108, the tension leg platform buoy 120 may contain ballast, such as water ballast, to help stabilize the floating wind turbine platform 102 upon deployment thereof to a body of water.

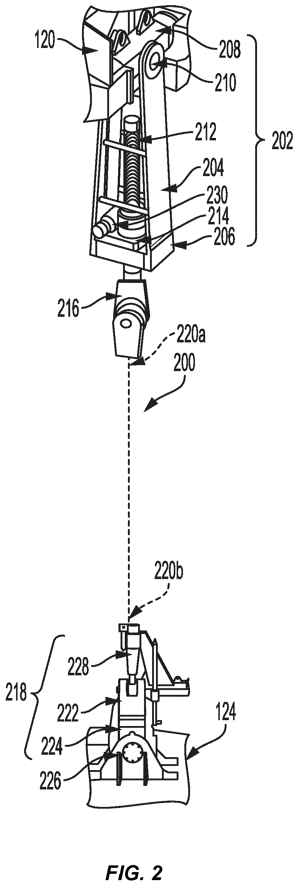

The tension leg platform buoy 120 may also include coupling points 115a-c for the mooring lines of the floating platform mooring system 100. As shown and described in more detail below with respect to FIGS. 2-3, there can be adjustable or fixed connectors positioned at each of the coupling points 115a-c to facilitate the connection of each of the mooring lines to the tension leg platform buoy 120. Generally, a floating platform mooring system 100 according to examples of this disclosure may include at least three fixed-length moorings lines in combination with at least one adjustable-length mooring line as further explained herein. In the example of FIG. 1A, the floating platform mooring system 100 includes three fixed-length mooring lines 122a-c and three adjustable-length mooring lines 126a-c of a mooring line arrangement 130 that can be used to secure the position of the floating platform 101 in a body of water. In the particular example shown the fixed-length mooring lines 122a-c and the adjustable-length mooring lines 126a-c extend between the tension leg platform buoy 120 and mooring piles 124.

A mooring pile may be a structure secured or otherwise positioned at the floor of the body of water, such as an ocean floor, to which a pile end of at least one mooring line may be coupled. A mooring pile is typically but not exclusively secured to the ocean floor by driving, embedding, screwing, or otherwise forcibly inserting at least a portion of the mooring pile into the ocean floor. Examples of the mooring piles 124 can include driven piles, suction piles, drilled piles, spring piles, breasting dolphins, gravity anchors, suction anchors, or combinations thereof.

In the example of FIG. 1A, there are three mooring piles 124 and six total mooring lines (i.e., fixed-length mooring lines 122a-c and adjustable-length mooring lines 126a-c) per tension leg platform buoy 120, but the number of mooring lines and mooring piles can vary in other examples. For example, there may be one or more adjustable-length mooring lines and/or more than three fixed-length mooring lines.

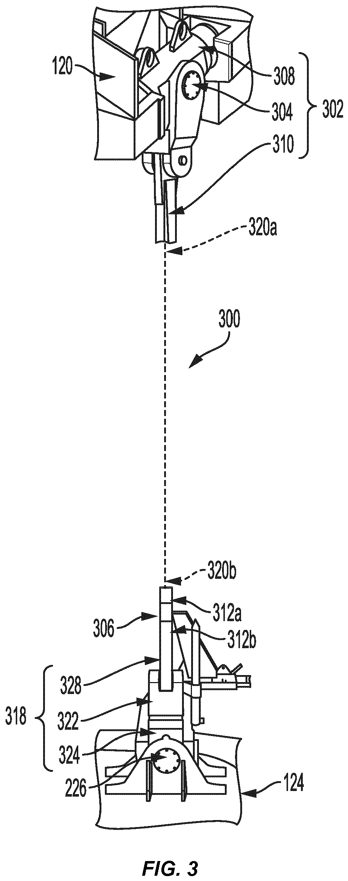

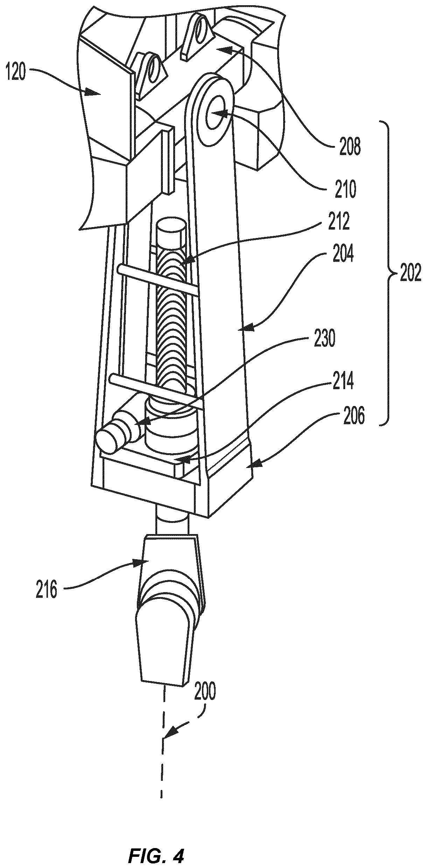

As shown in the example of FIGS. 2 and 4, a platform end of the adjustable-length mooring lines 126a-c can be coupled to the tension leg platform buoy 120, and thereby to the floating wind turbine platform 102, by a mooring line tension device 202. In contrast, and as shown in the example of FIG. 3, the fixed-length mooring lines 122a-c can be coupled to the tension leg platform buoy 120, and thereby to the floating wind turbine platform 102, by a first fixed connector 302.

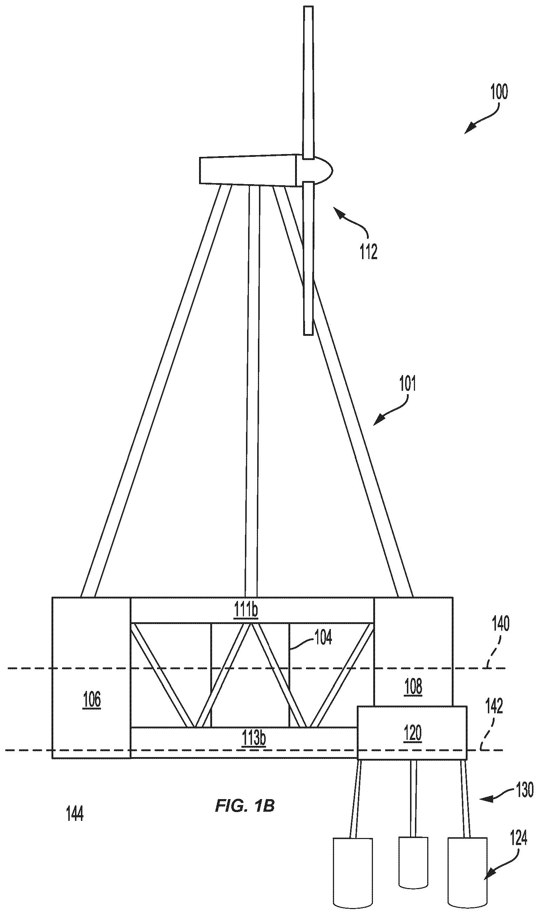

FIG. 1B is a schematic, side view of the floating platform mooring system 100 according to some embodiments of the present disclosure. As represented in FIG. 1B, the floating platform 101 has been deployed into a body of water 144 (e.g., an ocean). Additionally, in FIG. 1B, a horizontal axis of the floating platform 101 is indicated by dashed line 140. Moreover, in FIG. 1B, a reference horizontal plane is indicated by dashed line 142. The reference horizontal plane can be substantially aligned with a surface of the body of water 144. As shown, the floating wind turbine platform 102 has a level floating orientation in the body of water 144. In the level floating orientation, an angle between the horizontal axis of the floating platform 101 and the reference horizontal plane is within a degree tolerance (e.g., 0 +/- 5 degrees) and there is minimal inclination of the float columns 104, 106, 108 or the wind turbine 112.

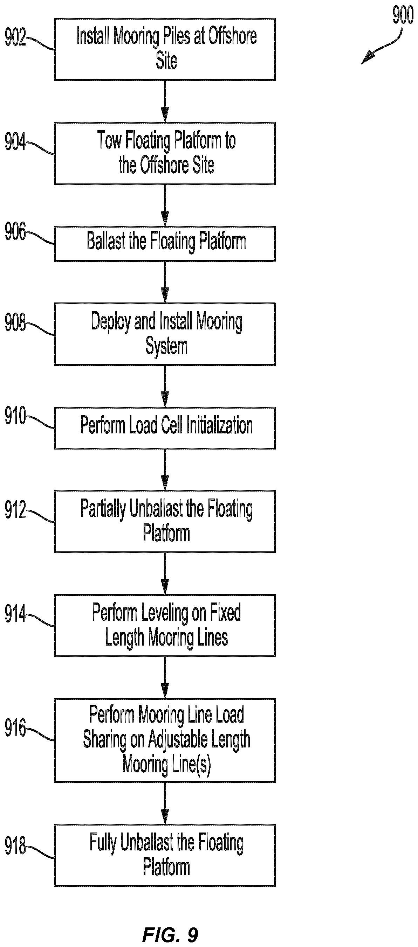

FIG. 2 shows an example of an adjustable-length mooring line 200 of the mooring line arrangement 130 of FIGS. 1A and 1B. The adjustable-length mooring line 200 can correspond to any of the adjustable-length mooring lines 126a-c shown in FIGS. 1A and 1B. As will be described in further detail below with respect to FIG. 9, the adjustable-length mooring line 200 can support a load (e.g., a load associated with the floating platform 101) with other adjustable-length mooring lines, one or more fixed-length mooring lines, or a combination thereof. In this way, if one or more of the other adjustable-length mooring lines or the fixed-length mooring lines fail, stability of the floating platform 101 can be maintained.

In some examples, a platform end 220a (i.e., a first end positioned further from a floor of a body of water than a second end) of the adjustable-length mooring line 200 can be coupled with a floating platform (e.g. directly to the floating platform or to a component associated with the floating platform such as a tension leg platform buoy 120) via a mooring line tension device 202 that is configured for adjusting the effective length of an assembly with the adjustable-length mooring line 200 and mooring line tension device 202 in situ. Additionally, a pile end 220b (i.e., the second end positioned closer to the floor of the body of water than the first end) of the adjustable-length mooring line 200 can be coupled with a mooring pile 124 via a fixed connector 218 that is not adjustable in length. In other examples, the mooring line tension device 202 can be positioned at the mooring pile 124 and the fixed connector 218 can be positioned at the tension leg platform buoy 120. Thus, in such examples, the pile end 220b of the adjustable-length mooring line 200 can be coupled with the mooring pile 124 via the mooring line tension device 202 and the platform end 220a of the adjustable-length mooring line 200 can be coupled with the tension leg platform buoy 120 via the fixed connector 218. The adjustable-length mooring line 200 may comprise any suitable mooring line with sufficient strength and rigidity for supporting at least a portion of the load associated with the floating wind turbine platform 102. For example, the adjustable-length mooring line 200 can include a steel wire rope, a chain, a synthetic fiber line, or the like.

The mooring line tension device 202 to which the adjustable-length mooring line 200 can be coupled may be a screw jack system mooring connector (as shown) or another suitable type of fine or gross adjustment system. Adjustments can be made to the tension on the adjustable-length mooring line 200 using the mooring line tension device 202, which can enable optimized load sharing among mooring lines. For example, it may be desirable to have similar tension on the adjustable-length mooring line 200 and an associated fixed-length mooring line. The similar tension can indicate that the adjustable-length mooring line 200 and the associated fixed-length mooring line are supporting a similar portion of the load from the floating wind turbine platform 102 or the other suitable floating platform. If, for example, there is significantly more tension in the adjustable-length mooring line 200 than in the associated fixed-length mooring line, the mooring line tension device 202 can be used to increase the length of the adjustable-length mooring line 200 in situ. In contrast, if, for example, there is significantly less tension in the adjustable-length mooring line 200 than in the associated fixed-length mooring line, the mooring line tension device 202 can be used to decrease the length of the adjustable-length mooring line 200 in situ. In some implementations the length or effective length of the adjustable-length mooring line 200 can be defined by a distance between a point of contact of the mooring line tension device 202 and the tension leg platform buoy 120 (e.g., at first suspension element 208) and the mooring pile 124 to which the adjustable-length mooring line 200 is connected.

In the example shown in FIGS. 2 and 4, in which FIG. 4 shows the mooring line tension device 202 in greater detail, the mooring line tension device 202 can include a first housing 204. The first housing 204 may have a base portion 206 at a distal end thereof. As shown, the first housing 204 may be a substantially open frame having various interconnected bracing or other members. Additionally, the mooring line tension device 202 can include the first suspension element 208 coupled to the first housing 204 at a proximal end thereof. The first suspension element 208 can be used to pivotably couple the first housing 204 to the tension leg platform buoy 120. For example, as shown in FIGS. 2 and 4, the tension leg platform buoy 120 can include a cavity in which the first suspension element 208 may be received and releasably retained. The first suspension element 208 may be cylindrical in shape, but other shapes or a combination of shapes is also possible.

The mooring line tension device 202 can further include a linearly displaceable element of a linear actuator, which may extend through the base portion 206 of the first housing 204 and into the open interior thereof. The linear actuator may be coupled to the base portion 206 of the first housing 204. The linear actuator may be any of several types of linear actuators. For example, the linear actuator may be a hydraulic or pneumatic cylinder and the linearly displaceable element may be a piston rod. In other examples, the linear actuator may be a screw drive, such as a screw drive having a hydraulic or pneumatic motor, or a screw drive driven by a separate hydraulically, pneumatically, or electrically-driven rotary tool.

In the particular example illustrated in FIGS. 2 and 4, the linear actuator can be a mechanically driven jackscrew assembly 214 and the linearly displaceable element can be a lifting screw 212 of the jackscrew assembly 214. The lifting screw 212 may be indirectly coupled to the base portion 206 of the first housing 204 by other components (e.g., a drive housing) of the jackscrew assembly 214. Rotation of a component (e.g., a nut) in threaded engagement with the lifting screw 212 can result in a linear displacement of the lifting screw 212 relative to the first housing 204. Rotation of the nut can be generated by engagement of the nut with a worm drive 230 of the jackscrew assembly. Particularly, rotation of the nut in one direction can cause the lifting screw 212 to be linearly displaced in a distal-to-proximal direction (i.e., toward the tension leg platform buoy 120), while rotation of the nut in the opposite direction can cause the lifting screw 212 to be linearly displaced in a proximal-to-distal direction (i.e., away from the tension leg platform buoy 120). Thus, the jackscrew assembly 214 can enable adjustments to the length of the adjustable-length mooring line 200.

The jackscrew assembly 215 may include a motor-driven rotatable element such as the worm drive 230 shown in FIG. 4 or, in other implementations, a bevel gear drive or another drive mechanism for engaging and rotating the nut. A motor (not shown) (e.g., an electrical or hydraulic motor) for rotating the motor-driven rotatable element can be coupled with and controlled by a wired or wireless controller. Additionally or alternatively, the motor-driven rotatable element can be engaged with a submersible tool, such as a submersible torque tool, operated by a remotely operated vehicle (ROV). The mooring line tensioning device can be operated while in an installed and submerged or semi-submerged position with respect to the body of water.

In the example shown in FIGS. 2 and 4, a first connecting element 216 may be located at a distal end of the lifting screw 212. The first connecting element 216 may be an integral portion of the lifting screw 212 or may be a separate element that is attached to the lifting screw 212. The first connecting element 216 can couple the lifting screw 212 to the platform end 220a of the adjustable-length mooring line 200. In other examples, the mooring line tension device 202 can be coupled to the mooring pile 124 instead of the tension leg platform buoy 120. In such examples, the first connecting element 216 can couple the lifting screw 212 to the pile end 220b of the adjustable-length mooring line 200. The first connecting element may be any suitable component for connecting to the adjustable-length mooring line 200 (e.g. in some implementations it may be a swage connector, a hook, a clip, an axle pin, or another type of component).

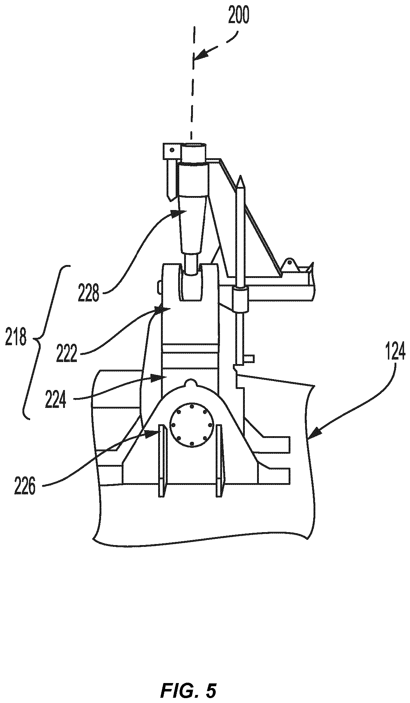

FIGS. 2 and 5 illustrate an example of a fixed connector 218, with FIG. 5 showing an enlarged view of the fixed connector 218. The fixed connector 218 is "fixed" in that it does not include components or functionality for adjusting tension unlike the mooring line tension device of FIGS. 2 and 5. Moreover, the fixed connector 218 is "fixed" even though it includes components connected together in a pivoting fashion to one another. For instance, the second housing 222 and second connecting element 228 of the fixed connector 218 (discussed in further detail below) are connected in a pivoting fashion to one another, and the second housing 222 is connected between protrusions (e.g. protrusion 226) in a pivoting fashion, thereby allowing the pile end 220b of the adjustable-length mooring line 200 to more-readily pivot relative to the mooring pile 124.

The fixed connector 218 in this example includes a second housing 222. As shown, the second housing 222 may be a substantially closed frame having various interconnected bracing or other members. The fixed connector 218 may further include a second suspension element 224 which can be coupled to the second housing 222 at a first (e.g., a pile) end thereof. The second suspension element 224 can be used to couple the second housing 222 to the mooring pile 124. As shown in FIG. 2, the mooring pile 124 can include two or more protrusions 226 with a cavity therebetween. The first suspension element 208 may be received and retained in the cavity between the protrusions 226.

The fixed connector 218 can further include a second connecting element 228. The second connecting element 228 may be an integral portion of the second housing 222 or may be a separate element that is attached to the second housing 220. The second connecting element 228 can couple the pile end 220b of the adjustable-length mooring line 200 to the fixed connector 218 and therefore to the mooring pile 124. In other examples, the fixed connector 218 can be coupled to the tension leg platform buoy 120. In such examples, the second connecting element 228 can couple the platform end 220a of the adjustable-length mooring line 200 to the tension leg platform buoy 120. The second connecting element may be any suitable component for connecting to the adjustable-length mooring line 200 (e.g. in some implementations it may be a swage connector, a hook, a clip, an axle pin, or another type of component).

FIG. 3 shows an example of a fixed-length mooring line 300 of the mooring line arrangement 130 of FIGS. 1A and 1B. The fixed-length mooring line 300 can correspond to any of the fixed-length mooring lines 122a-c of FIGS. 1A and 1B. As will be described in further detail below with respect to FIG. 9, the fixed-length mooring line 300 can share a load associated with a floating wind turbine platform 102 with other fixed-length mooring lines, one or more adjustable-length mooring lines, or a combination thereof.

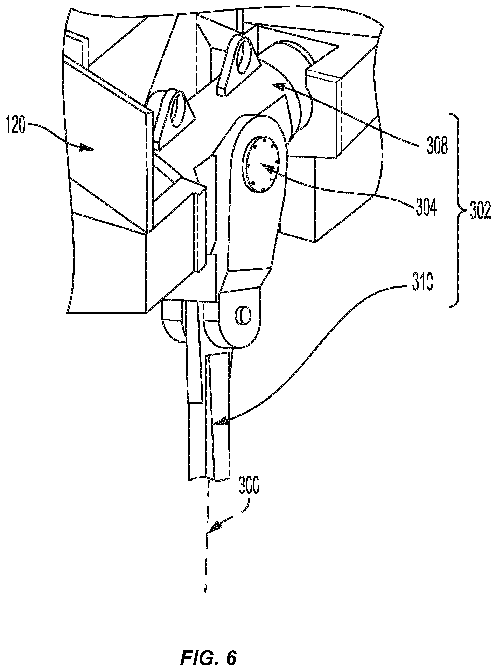

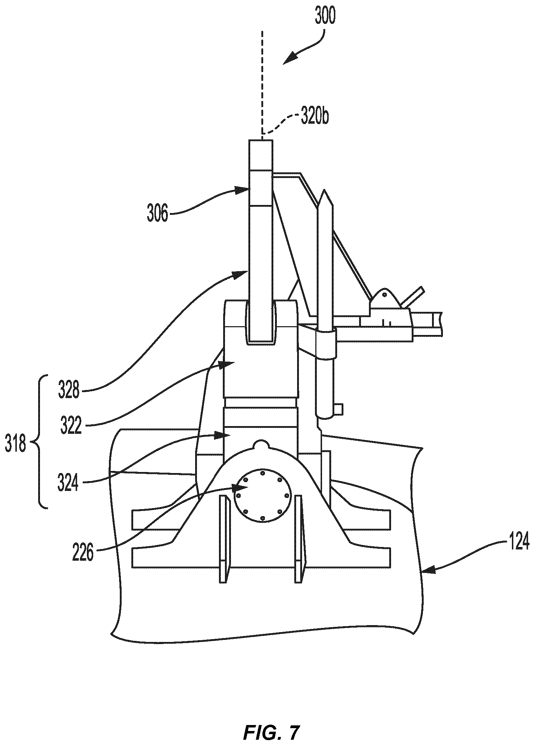

A platform end 320a of the fixed-length mooring line 300 of FIG. 3 is shown enlarged in FIG. 6. In this example, the platform end 320a is coupled with the tension leg platform buoy 120 via a first fixed connector 302. A pile end 320b of the fixed-length mooring line 300 of FIG. 3 is shown enlarged in FIG. 7. In this example, the pile end 320b is connected with a mooring pile 124 via a second fixed connector 318 and an adjustment link 306. As with the fixed connector 218 discussed above, the fixed connectors 302 and 318 are "fixed" in that they do not include components or functionality for adjusting tension unlike the mooring line tension device of FIGS. 2 and 5. Moreover, the fixed connectors 302 and 318 are "fixed" even though they include components connected together in a pivoting fashion to one another. In the example of FIG. 3 the fixed-length mooring line 300 may be any suitable line with sufficient strength and rigidity for supporting at least a portion of the load associated with the floating wind turbine platform 102. For example, the fixed-length mooring line 300 can be a steel wire rope, a chain, a synthetic fiber line, or the like.

The first fixed connector 302 in FIGS. 3 and 6 can be any suitable connecting mechanism capable of connecting the fixed-length mooring line 300 to a floating platform. In the particular example shown the first fixed connector 302 includes a first housing 304 and a first suspension element 308. The first suspension element 308 can be used to pivotably couple the first housing 304 to the tension leg platform buoy 120. The first suspension element 308 may be cylindrical in shape, but other shapes or a combination of shapes is also possible. As shown in FIG. 6, the tension leg platform buoy 120 can include a cavity in which the first suspension element 308 may be received and releasably retained.

Additionally, the first fixed connector 302 can include a first connecting element 310, which may be located at and coupled with a distal end of the first housing 304. The first connecting element 310 may be an integral portion of the first housing 304 or may be a separate element that is attached to the first housing 304. The first connecting element 310 can couple with the platform end 320a of the fixed-length mooring line 300 to connect the fixed-length mooring line 300 to the tension leg platform buoy 120. The first connecting element may be any suitable component for connecting to a fixed-length mooring line (e.g. in some implementations it may be a swage connector, a hook, a clip, an axle pin, or another type of component).

The second fixed connector 318 in FIGS. 3 and 7 can similarly include a second housing 322 and a second suspension element 324. The second suspension element 324 can be coupled with the second housing 222 at a first (e.g., a pile) end thereof. The second suspension element 324 can be used to pivotably couple the first housing 304 to the mooring pile 124. For example, as shown in FIG. 3 and 7, the mooring pile 124 can include one or more protrusions 226 between which the second suspension element 324 may be coupled.

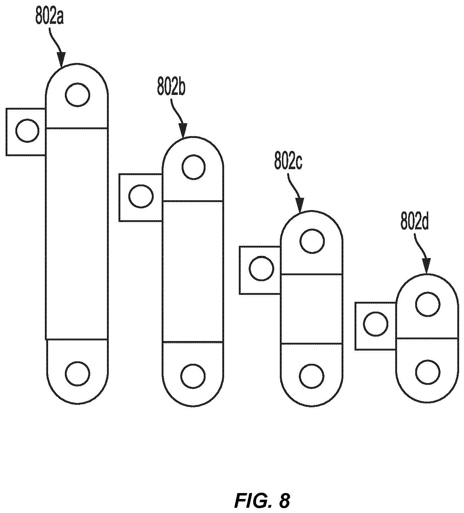

In the example shown in FIGS. 3 and 7, the second fixed connector 318 connects to an adjustment link 306 in a removable fashion, with the adjustment link 306 connecting in turn to the pile end 320b of the fixed-length mooring line 300 also in a removable fashion. The adjustment link 306 may be selected from one of the various length adjustment links 820a, b, c, d shown in FIG. 8.

The second fixed connector 318 can be coupled with an adjustment link 306. The adjustment link 306 can correspond to any of the adjustment links 802a-d depicted in FIG. 8. A side view of the adjustment link 306 is shown in FIGS. 3 and 7. As in shown in the front view of the adjustment links in FIG. 8, the adjustment link 306 can include a first opening and a second opening (e.g., first opening 804a and second opening 804b of adjustment link 802a). The pile end 320b of the fixed-length mooring line 300 can be coupled with the first opening, while the second housing 322 of the second fixed connector 318 may be coupled with the second opening. Thus, the adjustment link 306 can couple the pile end 320b of the fixed-length mooring line 300 to the second fixed connector 318 and therefore to the mooring piles 124.

FIG. 8 show an example of a set of adjustment links 802a-d for the floating platform mooring system 100 according to some embodiments of the present disclosure. As described above with respect to FIGS. 3 and 7, the adjustment links 802a-d can be positioned between and removably coupled with a fixed-length mooring line and a connector (e.g., fixed-length mooring line 300 and second fixed connector 318). As shown, the adjustment links 802a-d can each include a first hole (e.g., first hole 804a), which can facilitate connection of each adjustment link with a mooring line (e.g., fixed-length mooring line 300). The adjustment links 802a-d can each further include a second hole (e.g., second hole 804b), which can facilitate connection of each adjustment link to a mooring pile fixed connector (e.g., second fixed connector 318). The adjustment links 802a-d may further include a third hole 804c or another suitable lifting element. The third hole 804c or other suitable lifting element can be connected to a lowering and/or lifting mechanism or otherwise used in lifting and/or lowering the corresponding mooring line during mooring line deployment. Moreover, as shown, the adjustment links 802a-d can vary in length. As with be described in further detail below with respect to FIG. 9, the adjustment links 802a-d can be used to change an overall length of a fixed-length mooring line and adjustment link assembly to optimize horizontality and depth of the floating platform. This, in turn, can also optimize load sharing between fixed-length mooring lines 122a-c in a mooring line arrangement 130.

FIG. 9 is a flow chart of an example of a process 900 for mooring a floating platform using a floating platform mooring system, such as for instance but not limited to the floating platform mooring system 100 shown in the earlier figures, according to some embodiments of the present disclosure. In other examples, the process 900 can include more steps, fewer steps, different steps, or a different order of the steps depicted in FIG. 9. The steps of FIG. 9 are described below with reference to components discussed above in FIGS. 1-8.

At block 902, the process 900 can involve installing one or more mooring piles 124 at an offshore site. The offshore site can be a site at which a floating platform, such as a tension leg platform, barge platform, semi-submersible platform, or the like may or will be installed. The mooring piles 124 can be installed at the offshore site in a floor of a body of water. The mooring piles 124 can include protrusions 226 with a cavity therebetween or other anchor elements embedded in the mooring piles for receiving a connecting element (e.g., second suspension elements 224, 324).

At block 904, the process 900 can involve towing a floating platform (e.g., floating platform 101 including the floating wind turbine platform 102 and a tension leg platform buoy 120) to the offshore site. The floating platform can be towed by a transportation vessel (e.g., a tugboat). Mooring lines (e.g., the fixed-length mooring lines 122a-c and the adjustable-length mooring lines 126a-c depicted in FIG. 1A) of a mooring line arrangement can be partially pre-installed on the floating platform and secured (e.g., strapped) to the floating platform. In the partially pre-installed configuration, the adjustable-length mooring lines may be connected to the floating platform at their platform ends by mooring line tension devices (e.g. the mooring line tension device 202 shown in FIG. 4) installed on the floating platform, and the fixed-length mooring lines may be connected to the floating platform at their platform ends by fixed connectors installed on the floating platform. In the partially pre-installed configuration, the pile ends of the adjustable and fixed-length mooring lines may be temporarily secured to the floating platform or otherwise temporarily secured.

At block 906, the process 900 can involve ballasting (including adding additional ballasting to) the floating platform. For example, the floating platform can contain one or more ballast tanks, which may be filled with a liquid (e.g., water) to ballast the tension leg platform. In the particular example, the columns 104, 106, 108, the braces 110, the tension leg platform buoy 120, other components of the floating platform 101, or a combination thereof can include ballast tanks. A volume of the liquid in the tanks can be adjusted to ballast the floating platform 101. In particular, the volume of liquid in the tanks can be increased to lower the floating platform 101 to an installation depth. In at least some implementations the installation depth may be a depth that is deeper than an operating depth in the body of water (e.g., one to fifteen meters lower). Therefore, at the installation depth, it can be easier to connect the fixed-length mooring lines 122a-c and the adjustable-length mooring lines 126a-c to the mooring piles 124 on the floor of the body of water (e.g. because the floating platform 101 is closer to the mooring piles 124 allowing connection of the fixed-length mooring lines 122a-c and adjustable-length mooring lines 126a-c with those lines being under less tension than they otherwise would be when the floating platform is at the higher operating depth).

At block 908, the process 900 can involve deploying and installing the mooring line arrangement. To do so, the pile ends of the fixed-length mooring lines 122a-c and the adjustable-length mooring lines 126a-c can be deployed into the body of water and connected to the mooring piles 124. In at least some implementations, there may be three mooring piles, which can each receive one of the adjustable-length mooring lines 126a-c and one of the fixed-length mooring lines 122a-c. When installed, the adjustable-length mooring lines 126a-c can have an initial length that is greater (e.g., around 30 centimeters greater than, or around 15 to 45 centimeters greater than, or around 5 to 50 centimeters greater than) than a length of the fixed-length mooring lines 122a-c.

At block 910, the process 900 can involve performing load cell initialization. The load cells can be devices for measuring force or weight. Thus, the load cells can be used to measure tension in each of the fixed-length mooring lines 122a-c and the adjustable-length mooring lines 126a-c. The load cell initialization can include installing the load cells such that tension can be measured at each of the fixed-length mooring lines 122a-c and the adjustable-length mooring lines 126a-c and calibrating the load cells to facilitate accurate measurements. To do so, a load cell can be preinstalled on each of the adjustable-length and fixed-length mooring lines. In other examples, load cells may be preinstalled at only some of the adjustable-length and fixed-length mooring lines. The load cells may be "permanent" in that the load cells may remain installed at the mooring lines after the floating platform is moored. Alternatively, at least some of the load cells can be "temporary" in that the load calls may be removed from the mooring lines and retrieved once the floating platform is moored. In some examples, the initialization may further include testing the load cells to ensure the load cells are functioning properly.

At block 912, the process 900 can involve partially unballasting the floating platform. That is, at least some of the liquid can be released from the ballast tanks or the floating platform can otherwise be made lighter to cause the floating platform to move upward toward a surface of the body of water. In the particular example, the floating platform 101 can be unballasted to move upward from the installation depth to a testing depth. The testing depth may be a depth that is shallower than the installation depth and deeper than an operating depth for the floating platform. At the testing depth, there can be relatively low tension at each of the fixed-length mooring lines 122a-c and the adjustable-length mooring lines 126a-c compared to an operating depth but potentially greater tension on at least some of the mooring lines than the installation depth. In some implementations, tension on the fixed-length mooring lines 122a-c and the adjustable-length mooring lines 126a-c is relatively low when at the installation depth, higher at the testing depth, and even higher at operating depth. In some examples, due to the adjustable-length mooring lines 126a-c having a greater initial length than the fixed-length mooring lines 122a-c, tension in the fixed-length mooring lines 122a-c may be greater than tension in the adjustable-length mooring lines 126a-c at the testing depth.

At block 914, the process 900 can involve performing floating platform leveling on the fixed-length mooring lines while at the testing depth. The floating platform leveling can involve ensuring that horizontality, depth, or a combination thereof of the floating platform are within respective tolerances. A consequence of ensuring that horizontality, depth, or the combination thereof are within the respective tolerances may be relatively equal load sharing among the fixed-length mooring lines 122a-c. In the particular example, while the floating platform 101 is at the testing depth, horizontality of the floating platform can be analyzed as well as the depth of the floating platform. If the depth or horizontality of the floating platform is not within respective tolerances, an effective length (i.e., a length of an assembly that includes a fixed-length mooring line and an adjustment link) of one or more of the fixed-length mooring lines 122a-c can be changed by, for example, returning the floating platform to the installation depth and disconnecting the one or more fixed-length mooring lines 122a-c and switching out or adding adjustment links 702a-d to the one or more fixed-length mooring lines 122a-c. Changing the lengths of the particular adjustment links connected to the fixed-length mooring lines 122a-c can change the positioning of the floating platform (e.g., the floating platform depth and horizontality) and therefore can affect the load-sharing among the fixed-length mooring lines 122a-c.

In at least some implementations the floating platform leveling step involves assessment of an angle of a horizontal axis of the floating platform (e.g., the horizontal axis indicated by dashed line 140 in FIG. 1B) with respect to a reference horizontal plane (e.g., the reference horizontal plane indicated by dashed line 142 in FIG. 1B). The angle may be determined using an inclinometer or other suitable inclination device positioned on the floating platform or another suitable type of device usable to measure or estimate horizontality of the floating platform. Once the angle is determined, it can further be determined whether the angle is within a degree tolerance. For example, the degree tolerance may be 0 +/- 5 degrees. In other examples, the degree tolerance may be 0 +/- 10 degrees, 0 +/- 15 degrees, or 0 +/any number therebetween, or any number greater than 15 degrees or less than 10 degrees.

Additionally, upon partially unballasting the floating platform the floating platform can be positioned at an actual depth in the body of water. There can be a preferred depth for the positioning of the floating platform when unballasted. For example, the preferred depth of the floating platform upon the partial unballasting can be the testing depth, which may be 5, 10, 15, etc. meters below the surface of the body of water. Once the floating platform is partially unballasted, the actual depth can be determined. Then, it can further be determined whether the actual depth in within a depth tolerance. For example, the depth tolerance may be the testing depth +/- 1 meter. In other examples, the depth tolerance may be the testing depth +/- 3 meters, +/- 5 meters, any number therebetween, or any number greater than 5 meters or less than 3 meters.

In response to the angle of the horizontal axis with respect to the reference horizontal plane being outside of the degree tolerance and/or in response to the actual depth of the floating performance being outside of the depth tolerance, a leveling of the floating platform can be adjusted. The leveling of the floating platform can include an inclination of the floating platform with respect to the reference horizontal plane and/or a depth of the floating platform. To adjust the leveling of floating platform, the floating platform 101 can be re-ballasted to lower the floating platform 101 (e.g. to reposition the floating platform 101 at the installation depth). Then, at least one of the fixed-length mooring lines 122a-c can be disconnected from the corresponding mooring pile and retrieved such that an adjustment link of the retrieved fixed-length mooring line can be switched out to change a length of an assembly that includes the retrieved fixed-length mooring line and the adjustment link. For example, to move a portion of the floating platform upward (i.e., towards a surface of the body of water) to improve the horizontality of the floating platform, a longer adjustment link can be used while a shorter adjustment link can be used move the portion of the floating platform downward (i.e., towards a floor of the body of water). Additionally or alternatively, to move the floating platform upward to the testing depth, one or more longer adjustment links can be used while one or more shorter adjustment links can be used move the floating platform downward. The retrieved fixed-length mooring line can then be deployed and reconnected with the mooring pile, the floating platform may be returned to the testing depth, and the horizontality and depth (e.g., the angle of the horizontal axis with respect to the reference horizontal plane and the difference between the actual depth and the preferred depth) of the floating platform can be reevaluated. The above steps of evaluating the horizontality and depth, disconnecting one or more of the fixed-length mooring lines 122a-c, and changing the associated adjustment links can be repeated until the depth and horizontality of the floating platform are within the degree and depth tolerances.

At block 916, the process 900 can involve performing mooring line load sharing on the adjustable-length mooring line(s). In some examples, block 916 can be performed once the angle, the actual depth, or the combination thereof of the floating platform are within the degree tolerance, depth tolerance, and/or the combination thereof respectively.

In some implementations, to perform mooring line load sharing an initial adjustment can be made using the mooring line tension devices to reduce the initial length of the adjustable-length mooring lines 126a-c. Then, while the floating platform is at the testing depth, tension on the adjustable-length mooring lines 126a-c and the fixed-length mooring lines 122a-c can be measured using the load cells. If there is a significant difference (e.g., a difference that exceeds a threshold difference) between tension at any two of the fixed-length mooring lines 122a-c and the adjustable-length mooring lines 126a-c, adjustments can be made to the tension on the adjustable-length mooring lines 126a-c using mooring line tension devices. The tension may be adjusted while the floating platform is at the testing depth.

For example, the threshold difference may be around 200 kN. In other examples, the threshold difference may be 50 kN, 100 kN, 150 kN, 250 kN, any number therebetween, or any number greater than 250 kN or less than 50 kN. If there is a difference in tension between any two of the fixed-length mooring lines 122a-c and the adjustable-length mooring lines 126a-c of greater than 200N, the mooring line tension devices can be used to increase or decrease tension at one or more of the adjustable-length mooring lines 126a-c. To so increase or decrease tension, the length of the adjustable-length mooring lines 126a-c can be adjusted by displacing ends of one or more of the of the adjustable-length mooring lines 126a-c using the mooring line tension devices. Then, tension on the adjustable-length mooring lines 126a-c and the fixed-length mooring lines 122a-c can be reevaluated until any differences in tension between the fixed-length mooring lines 122a-c and the adjustable-length mooring lines 126a-c is below the threshold difference. In this way, a minimal tension difference of, for example, 200 kN or less between the fixed-length mooring lines 122a-c and the adjustable-length mooring lines 126a-c can be achieved.

At block 918, the process 900 can involve unballasting the floating platform. For example, once the tension is sufficiently similar at each of the fixed-length mooring lines 122a-c and the adjustable-length mooring lines 126a-c, the floating platform (e.g., the floating platform 101) can be further unballasted to its operating depth. In some implementations, some ballast may remain in the floating platform even when it is unballasted to its operating depth. During the process of unballasting the floating platform to the operating depth, any differences in tension (e.g., differences below the difference threshold) between adjustable and fixed length mooring lines remain mechanically constant even though the tension on the fixed and adjustable length mooring lines is greater at the operating depth than at the testing or installation depths. Consequently, a ratio of a tension difference between any two of the mooring lines to the tension in any one of the mooring lines can decrease upon unballasting in floating platform. The decrease in this ratio thereby indicates that tension in each of the mooring lines is enhanced when the floating platform is positioned at the operating depth.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure.

## Claims

1. A floating platform mooring system comprising:
at least three fixed-length mooring lines coupled at different locations between a floating platform and one of a plurality of mooring piles;
an adjustable-length mooring line coupled between the floating platform and one of the plurality of mooring piles; and
a mooring line tension device coupled to the adjustable-length mooring line to adjust a tension of the adjustable-length mooring line by adjusting a length of the adjustable-length mooring line in situ;
optionally, wherein the mooring line tension device is coupled between the floating platform and a platform end of the adjustable-length mooring line; and/or wherein the mooring line tension device is coupled between one of the plurality of mooring piles and a pile end of the adjustable-length mooring line.

2. The floating platform mooring system of claim 1, wherein the mooring line tension device comprises a linearly displaceable element that adjusts the length of the adjustable-length mooring line by displacing an end of the adjustable-length mooring line; optionally, wherein the mooring line tension device further comprises a jackscrew assembly, and wherein the linearly displaceable element comprises a linearly displaceable lifting screw of the jackscrew assembly.

3. The floating platform mooring system of claim 1, further comprising one or more adjustment links, wherein each of the one or more adjustment links is removably couplable to a fixed-length mooring line of the at least three fixed-length mooring lines to change an effective length of an assembly comprising the adjustment link and the fixed-length mooring line;
optionally, wherein each of the one or more adjustment links are removably couplable between one of the plurality of mooring piles and a pile end of a fixed-length mooring line of the at least three fixed-length mooring lines.

4. The floating platform mooring system of claim 1, wherein the floating platform comprises a floating wind turbine platform and a tension leg platform buoy, and wherein the at least three fixed-length mooring lines and adjustable-length mooring line extend between the tension leg platform buoy and one of the plurality of mooring piles.

5. A method of mooring a floating platform, the method comprising:
coupling at least three fixed-length mooring lines at different locations between the floating platform and one or more mooring piles;
coupling an adjustable-length mooring line between the floating platform and the one or more mooring piles; and
adjusting a tension of the adjustable-length mooring line by adjusting a length of the adjustable-length mooring line in situ using a mooring line tension device coupled to the adjustable-length mooring line.

6. The method of claim 5, further comprising, prior to coupling the at least three fixed-length mooring lines and the adjustable-length mooring line between the floating platform and the one or more mooring piles, ballasting the floating platform to position the floating platform at an installation depth in a body of water, wherein the installation depth is closer to a floor of the body of water than an operating depth of the floating platform.

7. The method of claim 6, wherein the step of coupling the at least three fixed-length mooring lines at different locations between the floating platform and one or more mooring piles is performed while the floating platform is at the installation depth; and/or wherein the step of coupling the adjustable-length mooring line between the floating platform and the one or more mooring piles is performed while the floating platform is at the installation depth.

8. The method of claim 6, further comprising, subsequent to coupling the at least three fixed-length mooring lines and the adjustable-length mooring line between the floating platform and the one or more mooring piles, unballasting the floating platform to position the floating platform at the operating depth.

9. The method of claim 8, further comprising, prior to unballasting the floating platform:
partially unballasting the floating platform to position the floating platform at a testing depth, wherein the testing depth is between installation depth and the operating depth;
determining an angle of a horizontal axis of the floating platform with respect to a reference horizontal plane while the floating platform is at the testing depth; and
determining that the angle is within a degree tolerance.

10. The method of claim 8, further comprising, prior to unballasting the floating platform:
partially unballasting the floating platform to position the floating platform at a testing depth, wherein the testing depth is between installation depth and the operating depth;
determining an angle of a horizontal axis of the floating platform with respect to a reference horizontal plane while the floating platform is at the testing depth; and
determining that the angle is outside of a degree tolerance.

11. The method of claim 10, further comprising, in response to determining that the angle is outside of the degree tolerance, adjusting a leveling of the floating platform by:
re-ballasting the floating platform to reposition the floating platform at the installation depth;
disconnecting a fixed-length mooring line of the at least three fixed-length mooring lines from the one or more mooring piles;
coupling an adjustment link with the fixed-length mooring line; and
reconnecting the fixed-length mooring line with the one or more mooring piles.

12. The method of claim 11, wherein the step of coupling the adjustment link with the fixed-length mooring line comprises replacing a first adjustment link of a first length with a second adjustment link of a second, different length.

13. The method of claim 9, further comprising, in response to determining that determining that the angle is within the degree tolerance:
measuring, while the floating platform is at the testing depth, tension on the adjustable-length mooring line and on the at least three fixed-length mooring lines; and
comparing the tension on the adjustable-length mooring line to the tension on each of the at least three fixed-length mooring lines.

14. The method of claim 13, wherein the step of adjusting the tension of the adjustable-length mooring line is performed while the floating platform is at the testing depth and in response to determining that at least one difference between the tension on adjustable-length mooring line and the tension on each of the at least three fixed-length mooring lines exceeds a threshold difference.

15. The method of claim 13, wherein the step of unballasting the floating platform to position the floating platform at the operating depth is performed in response to determining that differences between the tension on the adjustable-length mooring line and the tension on each of the at least three fixed-length mooring lines are less than a threshold difference.
